# EUROPEAN PATENT SPECIFICATION

(11) **EP 0 383 562 B1**
(45) Date of publication and mention of the grant of the patent: **01.06.1994**
(21) Application number: 90301547.7
(22) Date of filing: 14.02.1990
(51) Int. Cl.: G11B 7/085, G11B 19/20, G11B 7/09

(54) **Optical information recording and/or reproducing apparatus with device for prohibiting movement of optical head**
Gerät zur Aufnahme und/oder Wiedergabe von optischer Information mit Vorrichtung zum Ausschluss der optischen Kopfbewegung
Appareil pour l'enregistrement et/ou la reprocuction d'information optique avec dispositif pour interdire le mouvement de la tête optique

(30) Priority: 15.02.1989 JP 33718/89
(43) Date of publication of application: 22.08.1990
(73) Proprietor: CANON KABUSHIKI KAISHA, Tokyo (JP)
(72) Inventor: Kitai, Hiroto, 32-5-B203, Tokyo (JP); Tsuchiya, Keiji, Yokohama-shi, Kanagawa-ken (JP)
(74) Representative: Beresford, Keith Denis Lewis

(56) References cited:
- EP-A- 0 246 830
- DE-A- 3 546 067
- US-A- 4 800 546

## Description

The present invention relates to an apparatus for optically recording and/or reproducing information, and, more particularly, to an optical information recording and/or reproducing apparatus having an optical head for forming a light spot on a recording medium.

Hitherto, there have been known media for optically recording information and/or reading stored information, the media being in the form of a disk, a card, a tape, or the like. A portion of the optical information recording medium is capable of both reading and reproducing information and a portion of it is capable of only reproducing stored information.

Information is recorded on a record enable medium by scanning the information track with an optical beam which has been modulated by the information to be recorded and formed into a small spot so that information is recorded in the form of information bit strings which can be optically detected.

Information is regenerated from the recording medium by scanning the information bit strings on the information track with an optical beam spot of an output level that is too low to record information and by detecting a beam reflected from the recording medium or that has penetrated the same.

In order to apply the optical beam spot to the recording medium or to detect the beam reflected from the recording medium or the beam which has penetrated the same, an optical head is used. The optical head is arranged to relatively move in the direction of the information track of the recording medium or in a direction traversing the track of the same. The relative movement of the optical head allows an information track to be scanned by the optical beam spot.

There has been a great desire for the card type optical information recording medium (to be called "optical cards" hereinafter) because of its compact size and reduced weight, allowing it to be carried easily, and of its relatively large capacity.

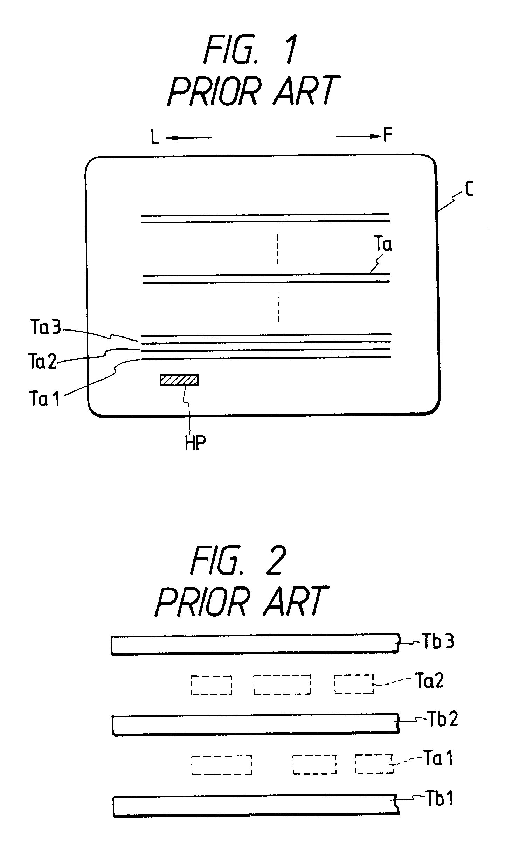

Fig. 1 is a schematic plan view which illustrates an write-once read many type optical card, and Fig.2 is an enlarged view which illustrates the track portion of the optical card shown in Fig. 1.

Referring to Fig. 1, a multiplicity of information tracks Ta running parallel to each other in direction LF are arranged on the surface of an optical card C on which information is arranged to be recorded. A home position HP serving as a referential position at the time of an access to the information track Ta is formed on the surface of the optical card C on which information is arranged to be recorded. The information track Ta is arranged in such a manner that information tracks Ta1, Ta2, Ta3, ... are arranged starting at the nearest position to the home position HP. The information tracks Ta are classified into information-recorded tracks on which information has been recorded and no-information recorded tracks on which no information has been recorded. The no-information recorded tracks are allowed to store information at any time.

As shown in Fig. 2, tracking tracks Tb are formed between the information tracks Ta, the tracking track Tb serving as a guide when an auto-tracking (to be called "AT" hereinafter) operation is performed for the purpose of conducting a control so that the optical beam spot does not deviate from a predetermined information track at the time of scanning with an optical beam spot when information is recorded or regenerated.

In general, the scanning with the optical beam spot is conducted by reciprocating the optical card which is solely moved or is placed on a carrier so as to be moved together with the carrier.

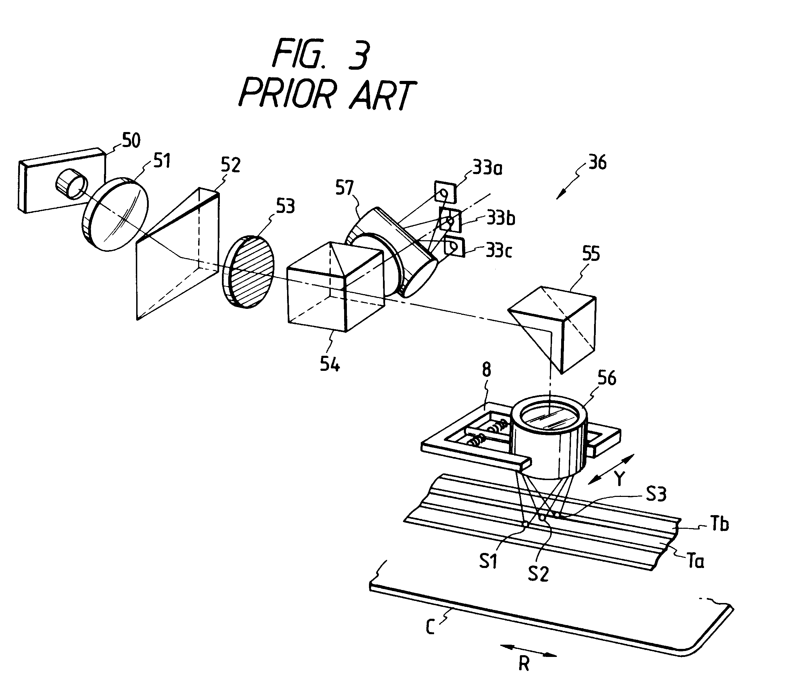

Fig. 3 is a perspective view which illustrates the optical head portion in detail.

Referring to the drawing, optical beams emitted from a semiconductor laser 50 are caused to form divergent rays so as to be made incident upon a collimator lens 51 with which the optical beams are converted into parallel optical beams. The parallel optical beams are shaped so as to have a predetermined light intensity distribution by an optical beam shaping prism 52 before the parallel optical beams are made incident upon a diffraction grating 53 with which it is then divided into three effective optical beams (a 0-order diffracted beam and ± 1-order diffracted beams). The three diffracted beams thus formed are made incident upon a beam splitter 54 and pass therethrough, and then are reflected by a reflecting prism 55. The optical beams thus reflected are made incident upon and pass through an object lens 56, and are thereby converged so that three small optical beam spots S1 (which corresponds to + 1-order diffracted beam), S2 (which corresponds to 0-order diffracted beam) and S3 (which corresponds to - 1-order diffracted beam) are formed on the optical card C.

The optical beam spots S1 and S3 are respectively positioned on the adjacent tracking tracks, while the optical beam spot S2 is positioned on an information track between the above-described tracking tracks. As a result, beam reflected from the optical beam spots formed on the optical card C are caused to run parallel after they have passed through the object lens 56. The thus formed parallel beams are reflected by the reflecting prism 55, and are further reflected by the beam splitter 54 before being converged by a convergent lens system 57 so as to be made incident upon photo-detectors 33a, 33b and 33c. The tracking error signals from the photo-detectors 33a to 33c are analyzed so that a tracking control is so conducted that the spot S2 always scans the information track Ta.

When a scanning operation with the optical beam spot is performed, the locus of the scanning optical may not always run parallel to the information tracks. The reason for this lies in a fact that the direction of the information track on the recording medium does not accurately coincide with the direction of the movements of the recording medium and the optical head. In general, this phenomenon is expressed by "skew" takes place.

In the state where AT servo is being operated at this time, the object lens 56 is, in an actuator 8 by means (omitted from illustration), moved in a direction Y across the information track Ta. However, the area, in which the object lens 56 is able to move, is limited to ± several hundred µms due to the structure of the actuator 8. If the object lens 56 is positioned too far away from the center when the AT servo is being operated, the tracking error becomes too critical in degree. Therefore, it is preferable that the movement of the object lens be limited to an area of ± 100 µm and in the vicinity of the center. When the position of the object lens is caused to move further away from the center due to the skew, the tracking operation is continued by causing the actuator 8 holding the object lens to move in the direction Y as an alternative to a structure in which the object lens is moved.

That is, when only the movement of the object lens cannot sufficiently achieve the tracking control, it can be achieved by moving the overall body of the optical head constituted by the actuator 8 and the like, the operation for moving the overall body of the optical head being called "a head movement operation" hereinafter.

Hitherto, the above-described head movement operation is, as disclosed in US-A- 4,800,546, performed at any time except for the time at which the optical beam spot is positioned in a jump area.

The reason why the conventional structure has been arranged in such a manner that the head movement operation is not performed when the optical beam spot is positioned in the area for the track jump operation (which is an operation for moving the optical beam spot to another recording track) lies in that vibrations take place in the object lens of the optical head due to the influence of the track jump action. That is, if the head movement operation is performed during the track jump operation, the vibrations due to the head movement operation further acts on the object lens, causing a deviation of the focusing or a deviation of the tracking to inevitably take place.

According to the above-described conventional example, the movement of the optical head is performed at any time during the tracking operation except for the time at which the optical head is positioned in the track jump area, for example, the movement of the optical head is performed in an area in which the scanning of the optical card is decelerated, in an area in which the same is decelerated and in an area in which the scanning is inverted. However, the optical card is usually vibrated in the acceleration, deceleration and the inverted areas of the scanning speed of the optical head. Therefore, if the vibrations of the optical head generated at the time of the movement of the optical head are added to the vibrations of the optical card, the achievements of the tracking operation and the focusing operation become difficult. As a result, the deviation of the focusing or that of the tracking takes place.

In view of the foregoing, an object of the present invention is to provide an optical information recording and/or reproducing apparatus in which a focusing deviation and a tracking deviation are reduced in comparison to the conventional apparatus. The invention provides an optical information recording and/or reproducing apparatus comprising: an optical system 32 for forming at least one light spot on an optical information recording medium (C) provided with a plurality of tracks (Tbₙ & Taₙ) arranged in a predetermined direction and having a track jump area therein; an optical head comprising moving means for movably supporting said optical system; optical system driving means for driving said moving means to move the light spot in the track jump area such that the light spot shifts from one track (Tbₙ,Taₙ) at least to another track (Tb_{n±1},Ta_{n±1}) so that the light spot traces said other track (Tv_{N±1}, Ta_{n±1}); head moving means for moving said optical head relative to the optical information recording medium (C) in a direction substantially perpendicular to the track direction so that the light spot is caused to trace the track (Taₙ, Tbₙ) and to obtain access to an optional track (Tb_{n±1}, Ta_{n±1}); medium moving means for moving the optical information recording medium (C) so that said light spot is relatively moved along a track (Tbₙ, Taₙ) in a scanning direction for recording and/or reproducing information; detection means for detecting that the light spot is positioned in the track jump area; prohibition means for prohibiting movement of said optical head by said head moving means when said detection means detects that the light spot is positioned in the track jump area, characterised by: detection means for detecting a region in which relative speed in the scanning direction between the light spot and the optical information recording medium (C) varies; the detection being made when the light spot and the optical information recording medium (C) are being relatively moved by said medium moving means; and said prohibiting means prohibiting movement of said optical head by said head moving means in a region in which the relative speed in the scanning direction between the light spot and the optical information recording medium (C) varies.

The movement of the position of the optical head can thus be arranged to be performed in an area in which the relative vibrations between the optical card and the optical spot are reduced, that is in a region in which the relative scanning speed between the optical card and the optical spot is constant. As a result, an accurate track tracing and focusing tracing without any deviation of the focusing or the tracking can be realized even if the optical head is being move.

### BRIEF DESCRIPTION OF THE DRAWINGS

Other aspects, features and advantages of the invention will be apparent from the following description taken in connection with the accompanying drawings wherein;
Fig. 1 is schematic plan view which illustrates a conventional optical card of an appendant type;
Fig. 2 is an enlarged view which illustrates a track portion of the optical card shown in Fig. 1;
Fig. 3 is a perspective view which illustrates a conventional optical head portion in detail;
Figs. 4A to 4C illustrate a head movement operation according to the present invention;
Fig. 5 illustrates a first embodiment of an optical information recording and/or reproducing apparatus according to the present invention;
Fig. 6A is a block diagram which illustrates the detailed structures of an AT/AF control circuit and a head movement operation control circuit of the optical information recording and/or reproducing apparatus shown in Fig. 5;
Fig. 6B shows a relationship of an optical head and an optical card shown in Fig. 5;
Figs. 7A to 7C illustrate signals for the head movement operation according to a second embodiment of the present invention; and
Fig. 8 illustrates an AT/AF control circuit and the head movement operation control circuit according to a third embodiment of the present invention.

### DESCRIPTION OF THE PREFERRED EMBODIMENTS

The present invention will be described with reference to the drawings.

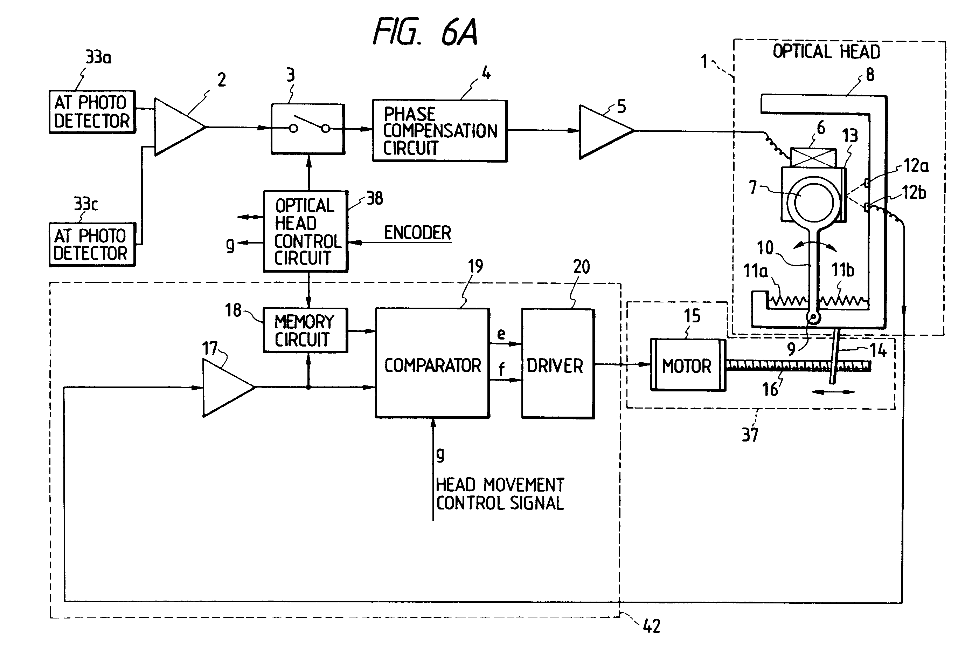

Fig. 6A is a block diagram which illustrates a head movement operation control circuit and an auto-tracking control circuit for performing a head movement operation control in an optical information recording and/or reproducing apparatus according to the present invention.

An object lens 7 is fastened to a support body 10 which moves relatively to a supporting point 9, the movement being conducted in an AT actuator 8. The above-described elements serve essential components of the optical head. The support body 10 is arranged so as to return to a middle point due to actions of two springs 11a and 11b when an AT coil 6 is not actuated, the two springs 11a and 11b being disposed on the two sides thereof.

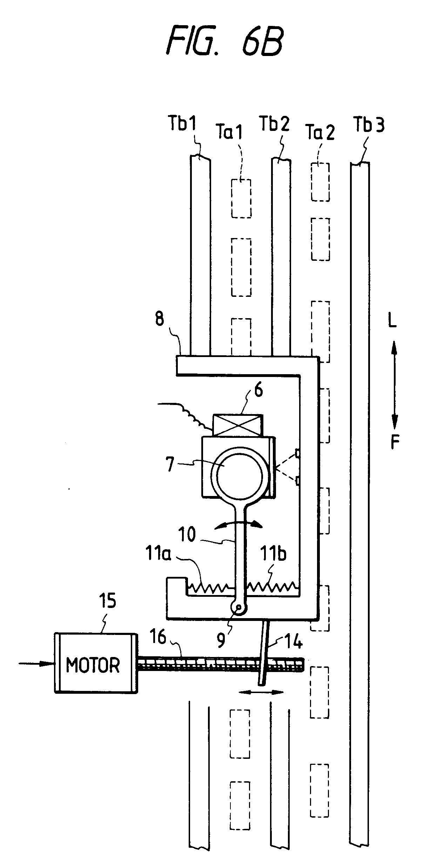

Fig. 6B illustrates the relationship between the above-described optical head and information tracks. The object lens 7 is tracking-controlled at the center of an information track Ta1 so that it records and/or reproduces information. Symbols Tb1 to Tb3 represent tracking tracks which are disposed, with the information tracks Ta1 and Ta2, on an optical card. The overall body of these tracks is scanned by an optical beam irradiated from the optical head with moving in directions L and F below the optical head.

Referring to the drawing, tracking error signals obtained from AT photo-detectors 33a and 33c are supplied to a differential signal amplifier 2. The output from the differential signal amplifier 2 is connected to a phase compensating circuit 4 via a switch 3. The output from the phase compensating circuit 4 is amplified by an AT coil driver 5 so as to actuate the AT coil 6.

The AT coil 6 drives an object lens 7 in the direction (in the right and left directions of the drawing) in which the tracks are arranged so that a tracking control is performed in such a manner that the optical beam spot accurately traces the information track.

The AT actuator 8 is provided with a pair consisting of a light emitting diode 12a and a photo-transistor 12b so that light emitted from the light emitting diode 12a is reflected by a reflecting surface 13 disposed on the side surface of the object lens 7, and then light is made incident upon the photo-transistor 12b. The AT actuator 8 is provided with a pin 14 which is engaged with a threaded shaft 16. As a result, the pin 14 moves in a direction, in which the tracks are arranged (in the right and left directions of the drawing), when the threaded shaft 16 is rotated. The overall body of the optical head incorporating the above-described actuator 8 is moved by the movement of the pin 14, the overall body being moved in the direction in which the tracks are arranged. Furthermore, only the object lens 7 is also moved in the direction in which the tracks are arranged, the object lens 7 being moved by the AT coil 6.

Light made incident upon the photo-transistor 12b is converted in an electric signal which is then amplified by a sensor amplifier 17 before it is then supplied to a storage circuit 18 and a comparator 19. The comparator 19 makes a comparison between the output from the sensor amplifier 17 and that from the storage circuit 18. If the difference exceeds a predetermined level, the comparator 19 supplies both a signal of a command to move the optical head and a signal denoting the direction in which the optical head is moved, these signals being supplied to the head moving motor driver 20. As a result, a driving motor 15 is rotated so as to move the AT actuator 8 by the threaded shaft 16 and the pin 14 in the direction in whcih the tracks are arranged. Thus, the optical head is moved.

An optical-head control circuit 38 is arranged to control the switch 3 and the storage circuit 18. Reference numeral 42 represents a head movement operation control circuit incorporating the amplifier 17, the storage circuit 18 and the comparator 19. Reference numeral 37 represents a motor for operating the optical head.

First, a switch signal is supplied from the optical head control circuit 38 to the switch 3 so as to cause the switch 3 to be switched off. Since an AT servo circuit constituted by the elements having reference numerals 2 to 6 is turned off in this state, no electric current passes through the AT coil 6 so that the object lens 7 is positioned at the neutral position. The reason for this lies in that the support body 10 is stopped by the springs 11a and 11b at a position (the neutral position) at which the support body 10 is balanced with the AT actuator 8, the support body 10 moving the object lens 7 in a direction, in which the tracks are arranged, relative to the supporting point 9.

In this state, light emitted from the light emitting diode 12a secured to the AT actuator 8 is reflected by the reflecting surface 13 on the side surface of the object lens 7. Then, the reflected light is made incident upon the photo-transistor 12b. The intensity of the incidental light is detected by a position sensor amplifier 17. The signal from the position sensor amplifier 17 is in the form of voltage of a level corresponding to the distance between the object lens 7 and the AT actuator 8. The voltage of the signal is measured at the neutral position of the object lens 7, the voltage thus measured being then stored in the memory circuit 18 in response to a command issued from the optical head control circuit 38.

Then, a switch signal is supplied from the optical head control circuit 38 so as to switch on the switch 3, causing the AT servo circuit to be turned on. The AT error signal supplied from the AT photo-detectors 33a and 33c is converted into an AT differential signal by the differential signal amplifier 2. The thus formed AT differential signal passes through the switch 3 before it is properly compensated by the phase compensating circuit 4. Then, the compensated signal is amplified by the AT coil driver 5 so that it actuates the AT coil 6. Thus, the auto-tracking state is maintained.

During the above-described auto-tracking operation, light which has been made incident upon the photo-transistor 12b is supplied to the position sensor amplifier 17 whose output is supplied to the comparator 19 in which the output from the position sensor amplifier 17 is subjected to a comparison with the voltage signal measured at the neutral position of the object lens 7. If the difference from the voltage at the neutral position exceeds a predetermined level due to a large change in the value of the position sensor amplifier 17 caused from a large movement of the object lens 7 when the object lens 7 is deviated by the skew or the external vibrations, it is determined that the movement of the object lens 7 cannot completely perform the tracking operation. Therefore, a head moving timing signal e and a direction signal f are supplied to the head moving motor driver 20 for the purpose of moving the optical head. The above-described "predetermined level" is a value of about ± 100 µm in terms of the distance.

It is arranged that the timing signal e and the direction signal f can be supplied to the head moving motor driver 20 during only the period enabled by a head movement operation control signal g to supply the signals e and f to the comparator 19. The head movement control signal g is supplied to the comparator 19 from the optical head control circuit 38 at timing to be described later and in accordance with a signal denoting the positional relationship between the optical head and the optical card, the signal being fed back by an encoder 21 to be described later.

Then, an operating signal is supplied from the head moving motor driver 20 to the operating motor 15 so that the threaded shaft 16 is rotated, causing the AT actuator 8 to be moved. As a result, the head movement operation is performed.

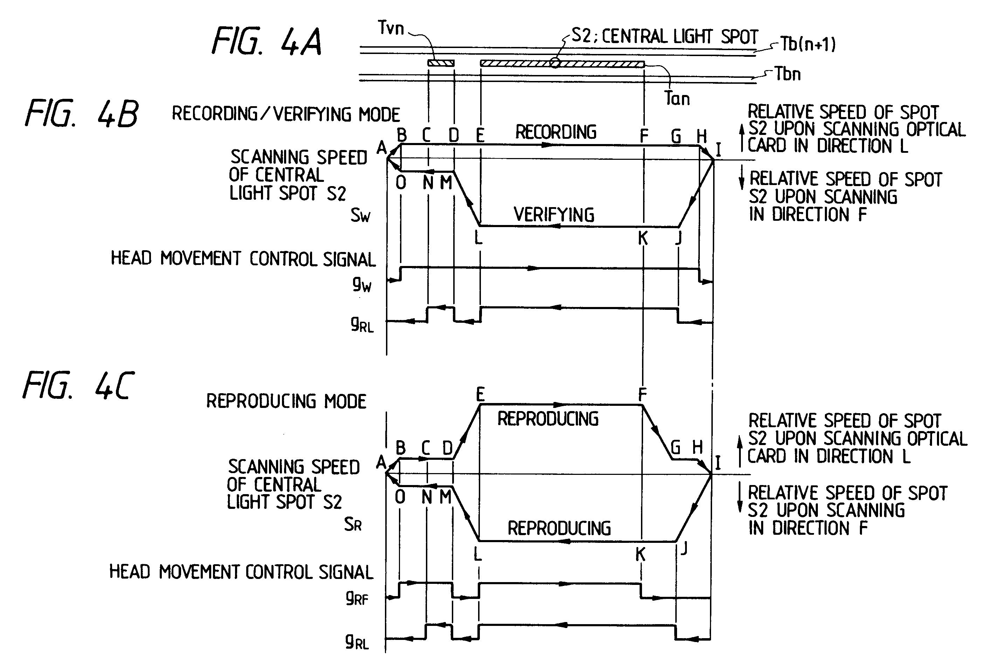

Then, the head movement operation for determining timing for supplying the above-described head movement control signal g according to an embodiment of the present invention will be described with reference to Figs. 4A to 4C.

Fig. 4A illustrates the tracking tracks Tbₙ and Tb₍ₙ₊₁₎, information tracks Tvₙ and Taₙ and light spot S2. The information track Taₙ shows a recording data area, while Tvₙ shows a verifying mark area, where the "verifying mark" is a mark which is written on the same information track if it has been confirmed that data had been correctly recorded, the confirmation being made by reading and reproducing operations conducted immediately after data has been recorded.

The scanning with the light spot is arranged to be conducted at a low speed at the time of recording data, recording the verify mark and reproducing the verify mark, while the scanning with the light spot is arranged to be conducted at a high speed at the time of reproducing data.

Fig. 4B is a view which illustrates the relationship between the scanning speed with the light spot and timing of the head movement operation control signal in a recording verifying mode in which the data recording is performed by a low speed scanning with the light spot in the forward direction and data reproduction from the same information track is conducted by a high speed scanning with the light spot in the reverse direction.

First, the scanning speed is accelerated at point A, and it reaches predetermined speed (low speed) at point B from which the scanning with the light spot at predetermined (low) speed is continued to point H. The verify mark is reproduced between points C and D so as to confirm that no verify mark has been recorded. Then, the data recording is conducted between points E and F. At this time, the head movement control signal g is raised to a high level at point B as designated by a signal g_{w}, this high level being maintained to point H at which the level is then lowered to a low level.

When the signal is in the high level area, the scanning with the light spot is performed at a predetermined speed. Therefore, this area is arranged to be an area in which the head movement is enabled, whereby a fact that the optical head can be moved is notified to the comparator 19 shown in Fig. 6A, and if necessary, the optical head is moved.

The scanning speed with the light spot is decelerated at point H, and it is then inverted at point I. The scanning speed is raised to predetermined (high) speed at point J, the high speed scanning with the light spot being maintained to point L so that the data portion is reproduced between points K and L. The scanning speed is started decelerating at point L, it is then lowered to predetermined (low) speed at point M, and the predetermined low speed scanning with the light spot is continued to point O. If necessary, the light spot is modulated in the area between M and N included in the area between M and O so that the verify mark is recorded, while a track jump operation for shifting the light spot to the adjacent track or the like is performed in the region between N and O. Then, the scanning speed is decelerated at point O, and is inverted at point A. The head control signal g in this reverse direction is made in the form of the signal g_{RL} which is raised to high level in an area between J and L and in an area between M and N, while the signal g_{RL} is lowered to low level in the other areas. That is, the constant high speed scanning is performed in the area between J and L, while the constant low speed scanning is performed in the area between M and N. Therefore, the head can be moved.

Since an area between N and O is an area in which the track jump is performed, the head movement is prohibited.

Fig. 4C illustrates the relationship between scanning speed and timing of the head movement control signal in the case where both the forward and reverse directions are in the reproduction modes. Referring to the drawing, the low speed scanning with the light spot is performed at the time of reproducing the verify mark, while the high speed scanning with the light spot is performed at the time of reproducing data.

Referring to Fig. 4C, scanning speed is accelerated at point A, and it reaches predetermined (low) speed at point B, the predetermined low speed scanning with the light spot being continued to point D. The verify mark is reproduced in an area between C and D. Then, the scanning speed is accelerated at point D, it is then raised to predetermined (high) speed at point E, and the predetermined high speed scanning with the lgiht spot is continued to point F. Data is reproduced in an area between E and F. The scanning speed is decelerated at point F, and is again lowered to the predetermined (low) speed at point G, the predetermined (low) speed scanning with the light spot being then continued to point H. An area between G and H is arranged to be an area in which the track jump is performed. The scanning speed is decelerated at point H and is then reversed at point I. The head movement control signal g is, as designated by a signal g_{RF}, raised to high level in an area between B and D and in an area between E and F in which head movement is enabled. In an area between I and A, the scanning is performed similarly to that performed in the reverse direction in the record verify mode shown in Fig. 4B. Therefore, the head movement control signal g_{RL} also becomes the same as in the record verify mode shown in Fig. 4B.

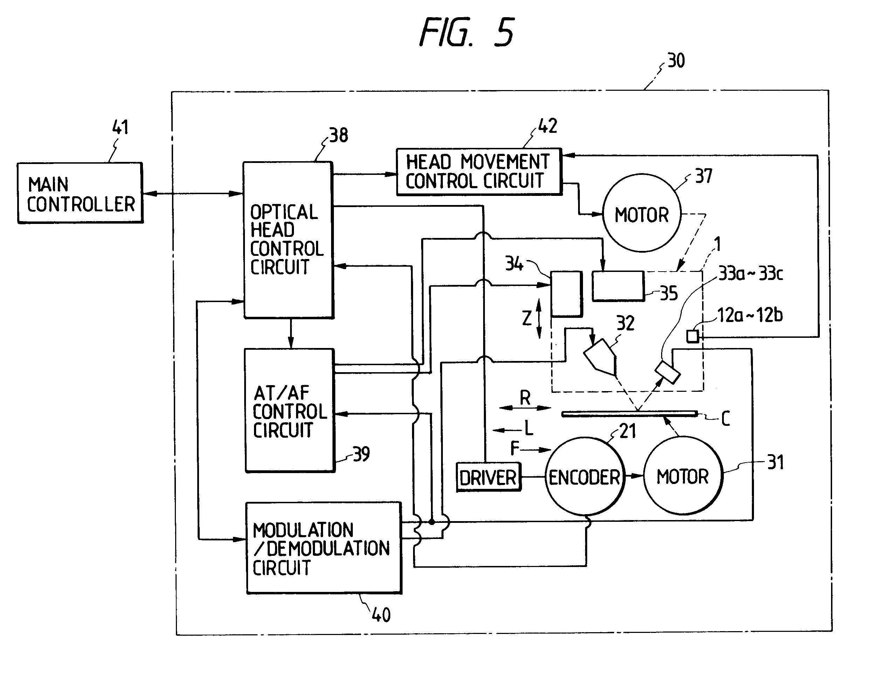

Fig. 5 is a block diagram which illustrates an embodiment of an optical information recording and/or reproducing apparatus including the head movement operation circuit shown in Fig. 6B and according to the present invention.

The elements given the same reference numerals shown in Fig. 6A are the same elements, and the descriptions about them are omitted here.

Referring to the drawing, a recording and/or reproducing apparatus 30 is so arranged to introduce the optical card C thereto by rotations of an operating motor 31 via a conveying mechanism (omitted from illustration). The optical card C thus introduced is reciprocated in direction R in the recording and/or reproducing apparatus 30 before it is discharged from the recording and/or reproducing apparatus 30. The optical card C is arranged to be applied with an optical beam from an optical beam irradiating optical system 32 incorporating a light source, the optical beam being irradiated at the time of recording information and of reproducing information. According to this embodiment, three optical beam spots are formed on the optical card C at the time of reproducing the recorded information so that the reflected light of the three optical beam spots are received by photo-detectors 33a to 33c. An auto-focusing actuator 34 performs the auto-focusing (to be abbreviated to "AF" hereinafter) by operating a portion of the optical beam irradiating optical system 32 so as to move the convergent point of the optical beam spot on the surface of the optical card C, the convergent point being moved in direction Z, that is in the perpendicular direction to the surface of the optical card C. An AT actuator 35 performs the AT by operating a portion of the optical beam irradiating optical system 32 so as to move the optical beam spot on the surface of the optical card C, the optical beam spot being moved in direction Y (that is in direction perpendicular to both the directions R and Z).

An optical head 36 is structured in such a manner that it incorporates the optical beam irradiating optical system 32, the photo-detectors 33a to 33c, the AF actuator 34 and the AT actuator 35. An operating motor 37 acts to move the optical head 36 in the direction Y so as to cause the optical beam spot to obtain access to a desired track on the optical card C. The operating motors 31 and 37 are controlled by an optical head control circuit 38. The positional relationship between the optical card C and the optical head 36 is detected by the encoder 21, and the signal representing the positional relationship is fed back to the optical head control circuit 38.

The outputs from the photo-detectors 33a to 33c are supplied to an AT/AF control circuit 39. The AT/AF control circuit 39 controls the AF actuator 34 and the AT actuator 35 so as to perform the auto-focusing (the AF) and the auto-tracking (the AT).

The outputs from the photo-detectors 33a to 33c are also supplied to a modulating/demodulating circuit 40 in which information, which has been read, is demodulated. The signal thus demodulated is supplied to the optical head control circuit 38. The modulating/demodulating circuit 40 also modulates an information signal supplied from the optical head control circuit 38. The optical beam irradiating optical system 32 is operated in accordance with the demodulation signal so that information is recorded.

The optical head control circuit 38 is controlled by a main control device 41 of a CPU structure, the optical head control circuit 38 being arranged to supply and receive data to and form the main control device 41.

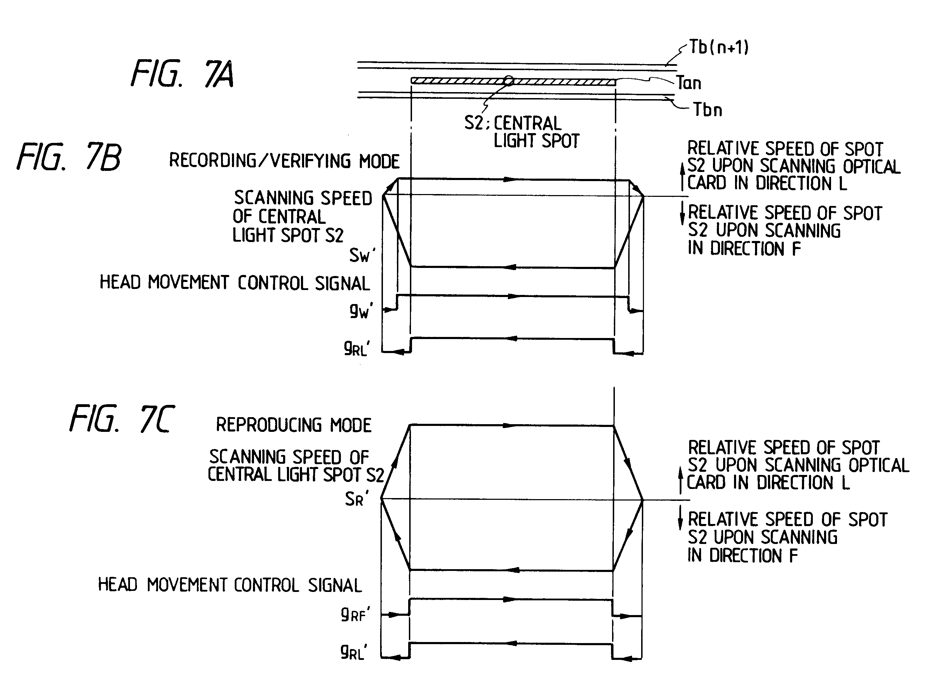

According to this embodiment, the acceleration operations and the deceleration operations are repeated for the purpose of recording/reproducing the verify mark. However, the acceleration and the deceleration can be simplified as shown in Figs. 7A to 7C in the case where the verify mark is unnecessary.

Fig. 7A illustrates tracking tracks T_{bn} and T_{b(n+1)}, data track Tₐₙ and light spot S2. No verify mark as shown in Fig. 1, is used here.

Fig. 7B illustrates the relationship between speed of the light spot and head movement control signals g_{w}′ and g_{RL}′ in the record/verify mode. The levels of the head movement control signals g_{w}′ and g_{RL}′ become a high level except for the acceleration and the deceleration areas. Therefore, the head movement is enabled.

Fig. 7C illustrates similar signals in the reproduction mode in which the head movement is also enabled except for the acceleration and the deceleration areas.

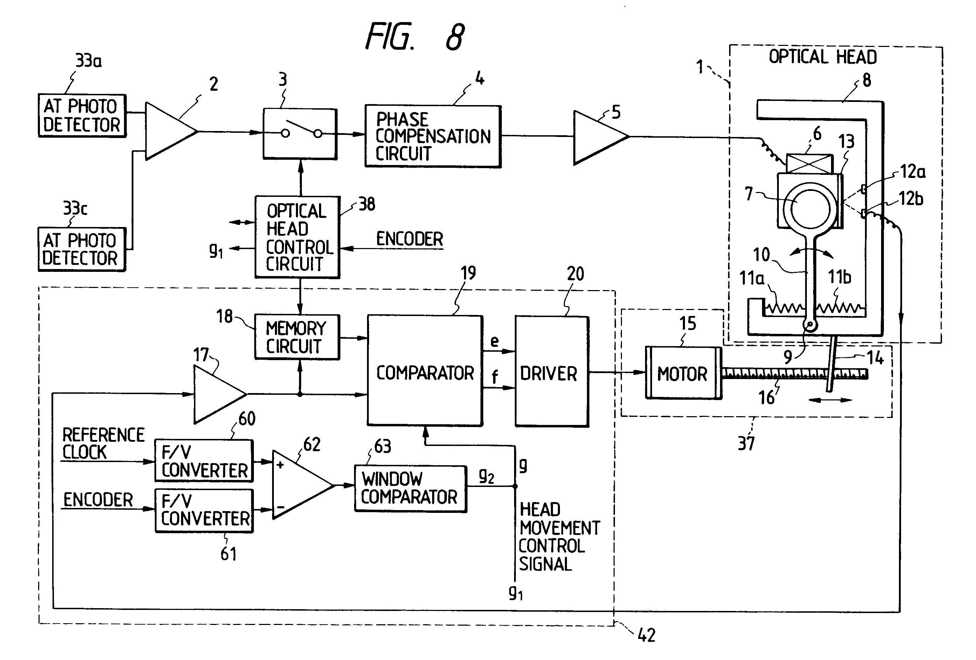

According to the first and the second embodiments, the head movement control signal g is formed by the signal denoting the positional relationship between the optical head and the optical card and is fed back by the encoder 21. However, the head movement operation control signal g may be formed by detecting speed from the pulse trains from the encoder in the following manner: as shown in Fig. 8, a reference clock signal which corresponds to desired speed and an encoder pulse are respectively F/V-converted by F/V converters 60 and 61, and the two signals are supplied to input terminals of a differential signal amplifier 62. The output voltage from the differential signal amplifier 62 is then subjected to a comparison in a window comparator 63. When the voltage of each of the signals is contained in a predetermined voltage area, it is determined that the speed has reached a predetermined speed area and the head movement operation signal g is transmitted.

In this case, similarly to the above-described embodiments, the head movement operation control signal g which corresponds to a fact that the optical beam spot has been positioned in the track jump area is detected by the signal denoting the positional relationship between the optical head and the optical card which is arranged to be fed back by the encoder. The thus detected head movement operation control signal g is transmitted from the optical head control circuit 38.

As many apparently widely different embodiments of this invention may be made without departing from the scope thereof, it is to be understood that the invention is not limited to the specific embodiments thereof except as defined in the appended claims.

## Claims

1. An optical information recording and/or reproducing apparatus (30) comprising:
an optical system 32 for forming at least one light spot on an optical information recording medium (C) provided with a plurality of tracks (Tbₙ & Taₙ ) arranged in a predetermined direction and having a track jump area therein;
an optical head (1, 36) comprising moving means (6, 11a & 11b) for movably supporting said optical system (32);
optical system driving means (2,3,4,5) for driving said moving means (6,11a & 11b) to move the light spot in the track jump area such that the light spot shifts from one track (Tbₙ & Taₙ) at least to another track (Tb_{n±1},Ta_{n±1}) so that the light spot traces said other track (Tv_{n±1},Ta_{n±1});
head moving means (37) for moving said optical head (1, 36) relative to the optical information recording medium (C) in a direction substantially perpendicular to the track direction so that the light spot is caused to trace the track (Taₙ, Tbₙ) and to obtain access to an optional track (Tb_{n±1}, Ta_{n±1}); medium moving means (31) for moving the optical information recording medium (C) so that said light spot is relatively moved along a track (Tbₙ, Taₙ) in a scanning direction for recording and/or reproducing information; detection means for detecting that the light spot is positioned in the track jump area; prohibition means for prohibiting movement of said optical head (1, 36) by said head moving means (37) when said detection means detects that the light spot is positioned in the track jump area,
characterised by:
detection means for detecting a region in which relative speed in the scanning direction between the light spot and the optical information recording medium (C) varies; the detection being made when the light spot and the optical information recording medium (C) are being relatively moved by said medium moving means (31); and
said prohibiting means prohibiting movement of said optical head (1, 36) by said head moving means (37) in a region in which the relative speed in the scanning direction between the light spot and the optical information recording medium (C) varies.

2. An apparatus according to claim 1, wherein said detection means comprises means (21) for detecting that the light spot is positioned in the track jump area and in a region in which the relative speed in the scanning direction between the light spot and the optical information recording medium (C) varies, said detection being made in accordance with a signal denoting the positional relationship between said optical head (1, 36) and the optical information recording medium (C).

3. An apparatus according to claim 1, wherein said detection means comprises first means (61, 62, 63) for detecting a region in which the relative speed in the scanning direction between the light spot and the optical information recording medium (C) varies, in accordance with a signal denoting said relative speed between said optical head (1, 36) and the optical information recording medium (C) and second means (21) for detecting that the light spot is positioned in the track jump area, in accordance with a signal denoting the positional relationship between said optical head (1, 36) and the optical information recording medium (C).

4. An apparatus according to claim 3, wherein said first means includes means (62) for comparing a signal denoting said relative speed with a signal denoting a desired relative speed, whereby the prohibition means prohibits movement of said optical head by said head moving means when said detection means detects that said relative speed differs substantially from said predetermined speed.

5. A method of recording and/or reproducing optical information in an apparatus comprising an optical system (32) for forming at least one light spot on an optical information recording medium (C) provided with a plurality of tracks (Tbₙ and Taₙ) arranged in a predetermined direction and having a track jump area therein, the method comprising:
driving an optical head (1, 36) of the optical system to move the light spot in the track jump area such that the light spot shifts from one track (Tbₙ and Taₙ) to another track (Tb_{n±1} and Ta_{n±1}) so that the light spot traces said other track;
moving said optical head relative to the optical information recording medium in a direction substantially perpendicular to the track direction so that the light spot is caused to trace Taₙ, Tbₙ) while moving the optical head and/or optical information recording medium so that said light spot is relatively moved along a track in the scanning direction for recording and/or reproducing information;
detecting when the light spot is positioned in the track jump area while the light spot and the optical information recording medium are being relatively moved; and
prohibiting said tracking movement of the optical head when the light spot is positioned in the track jump area;
characterised by detecting also when the light spot is positioned in a region in which the relative speed in the scanning direction between the light spot and the optical information recording medium varies, and prohibiting said tracking movement of the optical head when the light spot is positioned in such a region.

6. A method according to claim 5, wherein the step of detecting that the light spot is positioned in a region in which said relative speed varies is performed in dependence on the relative position of the light spot and the recording medium.

7. A method according to claim 5, wherein the step of detecting that the light spot is positioned in a region in which said relative speed varies is performed in dependence on a signal indicating said relative speed.

8. A method according to claim 7, wherein said tracking movement is prohibited when the indicated relative speed differs significantly from a predetermined speed.

## Patentansprüche

1. Gerät (30) zur Aufnahme und/oder Wiedergabe von optischer Information mit
einem optischen System (32) zur Bildung zumindest eines Lichtpunktes auf einem Aufnahmemedium (C) für optische Informationen, das mit einer Vielzahl von Spuren (Tbₙ & Taₙ) versehen ist, die in einer vorbestimmten Richtung angeordnet sind und darin einen Spurwechselbereich aufweisen,
einem optischen Kopf (1, 36) mit einer Bewegungsvorrichtung (6, 11a & 11b) zum beweglichen Tragen des optischen Systems (32),
einer Antriebsvorrichtung (2, 3, 4, 5) des optischen Systems zum Antrieb der Bewegungsvorrichtung (6, 11a & 11b) zur Bewegung des Lichtpunktes in dem Spurwechselbereich derart, daß der Lichtpunkt von einer Spur (Tbₙ & Taₙ) zumindest zu einer anderen Spur (Tb_{n±1}, Ta_{n±1}) wechselt, so daß der Lichtpunkt der anderen Spur (Tv_{n±1}, Ta_{n±1}) folgt,
einer Kopfbewegungs-Vorrichtung (37) zur Bewegung des optischen Kopfes (1, 36) relativ zum Aufnahmemedium (C) für optische Informationen in eine Richtung im wesentlichen senkrecht zur Spurrichtung, so daß der Lichtpunkt der Spur (Taₙ, Tbₙ) folgt und Zugriff auf eine weitere Spur (Tb_{n±1}, Ta_{n±1}) erhalt,
einer Mediumbewegungsvorrichtung (31) zur Bewegung des Aufnahmemediums (C) für optische Informationen, so daß der Lichtpunkt relativ entlang einer Spur (Tbₙ, Taₙ) in eine Abtastrichtung zur Aufnahme und/oder Wiedergabe von Information bewegt wird,
einer Erfassungsvorrichtung zur Erfassung eines Zustands, bei dem sich der Lichtpunkt in dem Spurwechselbereich befindet,
einer Sperrvorrichtung zum Verhindern einer Bewegung des optischen Kopfes (1, 36) durch die Kopfbewegungs-Vorrichtung (37), wenn die Erfassungsvorrichtung einen Zustand erfaßt, bei dem sich der Lichtpunkt in dem Spurwechselbereich befindet,
**gekennzeichnet durch**
eine Erfassungsvorrichtung zur Erfassung eines Bereichs, in dem sich die relative Geschwindigkeit in der Abtastrichtung zwischen dem Lichtpunkt und dem Aufnahmemedium (C) für optische Informationen verändert, wobei die Erfassung durchgeführt wird, wenn der Lichtpunkt und das Aufnahmemedium (C) für optische Informationen von der Mediumbewegungsvorrichtung (31) relativ zueinander bewegt werden, und die Sperrvorrichtung die Bewegung des optischen Kopfes (1, 36) durch die Kopfbewegungs-Vorrichtung (37) in einem Bereich verhindert, in dem sich die relative Geschwindigkeit in der Abtastrichtung zwischen dem Lichtpunkt und dem Aufnahmemedium (C) für optische Informationen verändert.

2. Gerät nach Anspruch 1, dadurch gekennzeichnet, daß die Erfassungsvorrichtung eine Vorrichtung (21) aufweist, die einen Zustand erfaßt, bei dem sich der Lichtpunkt in dem Spurwechselbereich und in einem Bereich befindet, in dem sich die relative Geschwindigkeit in der Abtastrichtung zwischen dem Lichtpunkt und dem Aufnahmemedium (C) für optische Informationen verändert, wobei die Erfassung gemäß einem Signal durchgeführt wird, das die Lagebeziehung zwischen dem optischen Kopf (1, 36) und dem Aufnahmemedium (C) für optische Informationen angibt.

3. Gerät nach Anspruch 1, dadurch gekennzeichnet, daß die Erfassungsvorrichtung eine erste Vorrichtung (61, 62, 63) zur Erfassung eines Bereichs, in dem sich die relative Geschwindigkeit in der Abtastrichtung zwischen dem Lichtpunkt und dem Aufnahmemedium (C) für optische Informationen verändert, gemäß einem Signal, das die relative Geschwindigkeit zwischen dem optischen Kopf (1, 36) und dem Aufnahmemedium (C) für optische Informationen angibt, und eine zweite Vorrichtung (21) aufweist, die gemäß einem Signal, das die Lagebeziehung zwischen dem optischen Kopf (1, 36) und dem Aufnahmemedium (C) für optische Informationen angibt, einen Zustand erfaßt, bei dem sich der Lichtpunkt in dem Spurwechselbereich befindet.

4. Gerät nach Anspruch 3, dadurch gekennzeichnet daß die erste Vorrichtung eine Vorrichtung (62) zum Vergleichen eines die relative Geschwindigkeit angebenden Signals mit einem eine gewünschte relative Geschwindigkeit angebenden Signal aufweist, wobei die Sperrvorrichtung die Bewegung des optischen Kopfes durch die Kopfbewegungs-Vorrichtung verhindert, wenn die Erfassungsvorrichtung einen Zustand erfaßt, bei dem die relative Geschwindigkeit wesentlich von der vorgegebenen Geschwindigkeit abweicht.

5. Verfahren der Aufnahme und/oder Wiedergabe von optischen Informationen in einem Gerät mit einem optischen System (32) zur Bildung zumindest eines Lichtpunktes auf einem Aufnahmemedium (C) für optische Informationen, das mit einer Vielzahl von Spuren (Tbₙ und Taₙ) versehen ist, die in einer vorgegebenen Richtung angeordnet sind und darin einen Spurwechselbereich aufweisen, wobei das Verfahren nachstehende Schritte umfaßt,
einem Antreiben eines optischen Kopfes (1, 36) des optischen Systems zur Bewegung des Lichtpunktes in dem Spurwechselbereich derart, daß der Lichtpunkt von einer Spur (Tbₙ und Taₙ) zu einer anderen Spur (Tb_{n±1} und Ta_{n±1}) wechselt, so daß der Lichtpunkt der anderen Spur folgt,
einem Bewegen des optischen Kopfes relativ zum Aufnahmemedium (C) für optische Informationen in einer Richtung im wesentlichen senkrecht zur Spurrichtung, so daß der Lichtpunkt der Spur (Taₙ, Tbₙ) während der Bewegung des optischen Kopfes und/oder des Aufnahmemediums (C) für optische Informationen folgt, so daß der Lichtpunkt relativ entlang einer Spur in der Abtastrichtung zur Aufnahme und/oder Wiedergabe von Information bewegt wird,
einem Erfassen, wenn sich der Lichtpunkt in dem Spurwechselbereich befindet, während der Lichtpunkt und das Aufnahmemedium für optische Informationen relativ zueinander bewegt werden, und
einem Sperren der Spureinstellungsbewegung des optischen Kopfes, wenn sich der Lichtpunkt in dem Spurwechselbereich befindet,
gekennzeichnet durch die Schritte
eines Erfassens auch dann, wenn sich der Lichtpunkt in einem Bereich befindet, in dem sich die relative Geschwindigkeit in der Abtastrichtung zwischen dem Lichtpunkt und dem Aufnahmemedium für optische Informationen verändert, und
eines Sperrens der Spureinstellungsbewegung des optischen Kopfes, wenn sich der Lichtpunkt in einem solchen Bereich befindet.

6. Verfahren nach Anspruch 5, dadurch gekennzeichnet, daß der Schritt des Erfassens eines Zustands, bei dem sich der Lichtpunkt in einem Bereich befindet, in dem sich die relative Geschwindigkeit verändert, in Abhängigkeit von der relativen Lage des Lichtpunktes und des Aufnahmemediums zueinander durchgeführt wird.

7. Verfahren nach Anspruch 5, dadurch gekennzeichnet, daß der Schritt des Erfassens eines Zustands, bei dem sich der Lichtpunkt in einem Bereich befindet, in dem sich die relative Geschwindigkeit verändert, in Abhängigkeit von einem die relative Geschwindigkeit angebenden Signal durchgeführt wird.

8. Verfahren nach Anspruch 7, dadurch gekennzeichnet, daß die Spureinstellungsbewegung verhindert wird, wenn die angezeigte relative Geschwindigkeit wesentlich von einer vorbestimmten Geschwindigkeit abweicht.

## Revendications

1. Appareil (30) d'enregistrement et/ou reproduction d'informations optiques comportant :
un système optique (32) destiné à former au moins un spot lumineux sur un support (c) d'enregistrement d'informations optiques pourvu de plusieurs pistes (Tbₙ & Taₙ) agencées dans une direction prédéterminée et renfermant une zone de saut de piste ;
une tête optique (1, 36) comportant des moyens de déplacement (6, 11a et 11b) destinés à supporter de façon mobile ledit système optique (32) ;
des moyens (2, 3, 4, 5) d'entraînement du système optique destinés à entraîner lesdits moyens de déplacement (6, 11a et 11b) pour déplacer le spot lumineux dans la zone de saut de piste de manière que le spot lumineux passe d'une piste (Tbₙ & Taₙ) au moins à une autre piste (Tb_{n±1}, Ta_{n±1}) pour que le spot lumineux suive ladite autre piste (Tv_{n±1}, Ta_{n±1}) ;
des moyens (37) de déplacement de tête destinés à déplacer ladite tête optique (1, 36) par rapport au support (c) d'enregistrement d'informations optiques dans une direction sensiblement perpendiculaire à la direction des pistes afin que le spot lumineux soit amené à suivre la piste (Taₙ, Tbₙ) et à accéder à une piste optionnelle (Tb_{n±1}, Ta_{n±1}) ; des moyens (31) de déplacement de support destinés à déplacer le support (C) d'enregistrement d'informations optiques afin que ledit spot lumineux soit déplacé relativement le long d'une piste (Tbₙ, Taₙ) dans une direction de balayage pour l'enregistrement et/ou la reproduction d'informations ; des moyens de détection destinés à détecter que le spot lumineux est positionné dans la zone de saut de piste ; des moyens d'empêchement destinés à empêcher un mouvement de ladite tête optique (1, 36) par lesdits moyens (37) de déplacement de tête lorsque lesdits moyens de détection détectent que le spot lumineux est positionné dans la zone de saut de piste,
caractérisé par :
des moyens de détection destinés à détecter une région dans laquelle une vitesse relative, dans la direction de balayage, entre le spot lumineux et le support (C) d'enregistrement d'informations optiques varie ; la détection étant réalisée lorsque le spot lumineux et le support (C) d'enregistrement d'informations optiques sont déplacés relativement par lesdits moyens (31) de déplacement du support ; et
lesdits moyens d'empêchement empêchant un mouvement de ladite tête optique (1, 36) par lesdits moyens (37) de déplacement de tête dans une zone dans laquelle la vitesse relative, dans la direction de balayage entre le spot lumineux et le support (C) d'enregistrement d'informations optiques varie.

2. Appareil selon la revendication 1, dans lequel lesdits moyens de détection comprennent des moyens (21) pour détecter que le spot lumineux est positionné dans la zone de saut de piste et dans une région dans laquelle la vitesse relative, dans la direction de balayage, entre le spot lumineux et le support (C) d'enregistrement d'informations optiques varie, ladite détection étant réalisée en fonction d'un signal indiquant la relation de position entre ladite tête optique (1, 36) et ledit support (C) d'enregistrement d'informations optiques.

3. Appareil selon la revendication 1, dans lequel lesdits moyens de détection comprennent des premiers moyens (61, 62, 63) destinés à détecter une région dans laquelle la vitesse relative, dans la direction de balayage, entre le spot lumineux et le support (C) d'enregistrement d'informations optiques varie, en fonction d'un signal indiquant ladite vitesse relative entre ladite tête optique (1, 36) et le support (C) d'enregistrement d'informations optiques, et des seconds moyens (21) destinés à détecter que le spot lumineux est positionné dans la zone de saut de piste, conformément à un signal indiquant la relation de position entre ladite tête optique (1, 36) et le support (c) d'enregistrement optique d'informations.

4. Appareil selon la revendication 3, dans lequel lesdits premiers moyens comprennent un moyen (62) destiné à comparer un signal indiquant ladite vitesse relative à un signal indiquant une vitesse relative souhaitée, à la suite de quoi les moyens d'empêchement empêchent un mouvement de ladite tête optique par lesdits moyens de déplacement de tête lorsque lesdits moyens de détection détectent que ladite vitesse relative diffère sensiblement de ladite vitesse prédéterminée.

5. Procédé d'enregistrement et/ou reproduction d'informations optiques dans un appareil comportant un système optique (32) destiné à former au moins un spot lumineux sur un support (C) d'enregistrement d'informations optiques pourvu de plusieurs pistes (Tbₙ et Taₙ) agencées dans une direction prédéterminée et renfermant une zone de saut de piste, le procédé consistant :
à entraîner une tête optique (1, 36) du système optique pour déplacer le spot lumineux dans la zone de saut de piste afin que le spot lumineux passe d'une piste (Tbₙ et Taₙ) et une autre piste (Tb_{n±1} et Ta_{n±1}) afin que le spot lumineux suive ladite autre piste ;
à déplacer ladite tête optique par rapport au support d'enregistrement d'informations optiques dans une direction sensiblement perpendiculaire à la direction des pistes afin d'amener le spot lumineux à suivre la piste (Taₙ, Tbₙ) tout en déplaçant la tête optique et/ou le support d'enregistrement d'informations optiques pour que ledit spot lumineux soit déplacé relativement le long d'une piste dans la direction de balayage pour l'enregistrement et/ou la reproduction d'informations ;
à détecter le moment où le spot lumineux est positionné dans la zone de saut de piste tandis que le spot lumineux et le support d'enregistrement d'informations optiques sont déplacés l'un par rapport à l'autre ; et
à empêcher ledit mouvement de suivi de la tête optique lorsque le spot lumineux est positionné dans la zone de saut de piste ;
caractérisé en ce qu'il consiste à détecter aussi le moment où le spot lumineux est positionné dans une région dans laquelle la vitesse relative, dans la direction de balayage, entre le spot lumineux et le support d'enregistrement d'informations optiques varie, et à empêcher ledit mouvement de suivi de la tête optique lorsque le spot lumineux et est positionné dans une telle région.

6. Procédé selon la revendication 5, dans lequel l'étape de détection du positionnement du spot lumineux dans une région dans laquelle ladite vitesse relative varie est effectuée en dépendance de la position relative du spot lumineux et du support d'enregistrement.

7. Procédé selon la revendication 5, dans lequel l'étape de détection du positionnement du spot lumineux dans une région dans laquelle ladite vitesse relative varie est effectuée en dépendance d'un signal indiquant ladite vitesse relative.

8. Procédé selon la revendication 7, dans lequel ledit mouvement de suivi est empêché lorsque la vitesse relative indiquée diffère notablement d'une vitesse prédéterminée.
